(19) Europäisches Patentamt
European Patent Office
Office européen des brevets

(11) **EP 3 106 846 A1**

(12) **EUROPEAN PATENT APPLICATION**

(43) Date of publication:
**21.12.2016 Bulletin 2016/51**

(51) Int Cl.:
***G01H 1/12*** *(2006.01)*     ***G01H 3/04*** *(2006.01)*
***G01H 3/10*** *(2006.01)*

(21) Application number: **15382326.5**

(22) Date of filing: **19.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Airbus Defence and Space, S.A.
28906 Getafe - Madrid (ES)**

(72) Inventors:
• **COLL HERRERO, Francisca
E-28906 Getafe - Madrid (ES)**
• **MIRANDA ORTE, José María
E-28906 Getafe - Madrid (ES)**

(74) Representative: **ABG Patentes, S.L.
Avenida de Burgos, 16D
Edificio Euromor
28036 Madrid (ES)**

(54) **METHOD FOR CHARACTERIZING OSCILLATIONS BY MEANS OF MACHINE VISION TECHNIQUES**

(57) The present invention relates to a method for characterizing the vibrations of an object, comprising the following steps: obtaining at least one signal by means of at least one sensor located in the object; obtaining the spectrogram of said at least one signal; identifying the regions of the spectrogram where the power spectral density is greater than a first threshold $\alpha$; segmenting the image into zones comprising at least one lobe; calculating the mean frequency associated with each lobe sector for a plurality of lobe sectors; calculating the root mean square value of each lobe sector.

EP 3 106 846 A1

# Description

## Object of the Invention

The present invention relates to a method for characterizing oscillations in vibrating systems. The invention particularly relates to a method for measuring the oscillations experienced by an object, preferably an airplane part during flight.

## Background of the Invention

Measuring oscillations in an object is important for being able to evaluate its service life and fatigue due to vibrations it experiences during use. There are many ways to take these measurements.

One method for characterizing frequencies and the level of oscillation of an object is by calculating the root mean square (RMS) value of the vibrations experienced by the object based on accelerometers installed in said object.

Patent document US 2013/211259 A1 determines the condition of the materials of a prosthetic joint, obtaining a signal from the vibrations measured in the prosthesis and applying Short-Time Fourier Transform (STFT) technique in the measured vibrations for the purpose of calculating the corresponding frequency spectrogram. The spectrogram is the result of calculating the spectrum of windowed frames of a signal. This results in a three-dimensional graph representing the energy of each vibration as it varies over time. The problem with using the Short-Time Fourier Transform (STFT) technique for estimating vibrations in an object is that separate information about frequencies is not obtained, and therefore not all the vibrations experienced by the material at a given instant in time can be characterized.

Patent document US 4,975,891 describes another technique for characterizing vibrations. This document shows how to characterize the vibrations experienced by an object by calculating power spectral density (PSD) from a vibration measured in several sensors arranged on the object. The problem with using power spectral density (PSD) for analyzing vibrations in an object is that the time sequence is lost, which means that the instant in time in which the vibration took place is unknown, and therefore the boundary conditions associated with said instant in time that could have caused said vibration in the material cannot be determined.

None of the solutions proposed in the state of the art is capable of detecting patterns of each of the frequencies in a given instant in time, which is a very important aspect in the aeronautics industry for being able to detect and correct vibrations that may damage the structure experiencing said vibrations.

There is a need to develop a method that obtains each of the frequencies independently in order to determine at which instants said oscillations took place for the purpose of identifying oscillation patterns within a system or between the different parts forming it, for example in the aeronautics industry, in control surfaces, wings, airframe, etc. Those vibrations that may endanger the integrity of said structure can thereby be predicted and/or prevented.

## Description of the Invention

The present invention proposes a solution to the problems found in the state of the art by means of a method for characterizing the vibrations of an object according to claim 1 and a computer program according to claim 11. Preferred embodiments of the invention are defined in the dependent claims.

A first aspect of the invention provides a method for characterizing oscillations of an object comprising the following steps:

    a) obtaining at least one signal from at least one sensor located in the object,
    b) obtaining the spectrogram of said at least one signal,
    c) identifying the regions of the spectrogram where the power spectral density is greater than a first threshold $\alpha$,
    d) segmenting the image into zones comprising at least one lobe,
    e) calculating the mean frequency associated with each lobe sector,
    f) calculating the root mean square value of each lobe sector in different instants in time.

Depending on the object and user needs, one or more sensors can be arranged on the object, distributed in different configurations. In one embodiment, the sensors are uniformly distributed throughout the object. In another embodiment, the sensors are distributed in specific locations in said object. In another embodiment, the sensors are randomly distributed in said object. The objective is to measure the greatest number of vibrations experienced by the object for the purpose of obtaining better characterization.

The type of signal to be measured can be any type of signal coming from a vibration, for example: vibration acceleration, material deformation measurements, the angular velocity of the vibration, forces etc. As discussed in the preceding paragraph, the sensors can be arranged in any way and in any position such that they can obtain a signal that is enough for characterizing the measured vibration.

Advantageously, the method selects a series of lobes, where each lobe comprises at least one vibration associated with a given frequency and having a duration equal to the extension of the lobe along the time axis. This method is capable of identifying structural couplings, resonances and verifying if said couplings or resonances are repeated in time, thereby solving the problems observed in the state of the art.

The terms vibration and oscillation are used interchangeably throughout this document. The meaning of both terms comprises the propagation of elastic waves causing deformations and stresses on a continuous medium (or equilibrium position).

In a particular embodiment, the method additionally comprises an intermediate step between steps c) and d), in which said step comprises:

- binarizing from a second threshold β the identified regions of the spectrogram to give rise to a binarized image.

The binarization step with respect to a threshold β increases method efficiency. Advantageously, this step allows automatically identifying zones without requiring the supervision of a technician.

In a particular embodiment, thresholds α and β are selected according to the level of oscillation to be identified. Those zones that comply with a certain level of oscillation suitable for containing an oscillation pattern to be identified are selected as a result of the threshold α. Once these zones have been identified, there may be small lobes in the spectrogram resulting from spurious signals introducing noise in the vibration measurement and reducing the precision of the obtained data. This problem is advantageously solved when binarizing using threshold β because said spurious lobes are eliminated, which increases measurement precision.

In a particular embodiment, the spectrogram is suitably tuned for identifying vibrations containing a given number of frequencies.

In a particular embodiment, the spectrogram is obtained for a predetermined frequency band.

The calculation of a spectrogram depends on several parameters, for example, its frequency range, signal overlap, etc. In a particular embodiment, the fact that the spectrogram is suitably tuned comprises the parameters being limited to the physical problem to be identified.

In a particular embodiment, the predetermined frequency band for which the spectrogram is obtained is from 0 to 3 Hertz. This frequency band advantageously allows studying the oscillations of a dynamic system in an airplane.

In another particular embodiment, the predetermined frequency band of the spectrogram is greater than 10 Hertz. Oscillations due to a flutter phenomenon would advantageously be evaluated in this frequency band.

In a particular embodiment, step b) comprises calculating the spectrogram using the short-time Fourier transform of the signal.

Advantageously, by reducing the number of frequencies, the frequency lobes that influence the couplings or resonances of the object the most are calculated with greater precision, increasing the efficiency of the method of the invention.

In a particular embodiment, the method additionally comprises:

- saving in a database the mean frequency and root mean square value obtained in steps e) and f), and/or
- saving in the database operating parameters of the conditions in which the signal has been measured.

By using databases, SQL-type statements can advantageously be applied to efficiently extract and associate the information about the vibrations and flight conditions experienced during the test.

In a particular embodiment, the operating parameters are selected from the group consisting of altitude, speed, elevation and roll.

In a particular embodiment, the method additionally comprises identifying the data in which at least one frequency pattern is repeated. In a particular embodiment, the frequency pattern is a pattern of frequencies comprising one and the same lobe morphology as a function of time.

In a particular embodiment, the method additionally comprises identifying the repetition of at least one frequency pattern over time. Preferably, the method additionally comprises identifying the operating parameters corresponding to at least one frequency pattern repeated over time.

Advantageously, as a result of this embodiment couplings or resonances of the object measured according to the method of the invention can be associated with the conditions in which said measurements have been taken, thereby determining which movements, what height, and what external conditions, for example temperature and/or humidity, can entail a risk for the integrity of the object.

In a particular embodiment prior to step b), the method additionally comprises eliminating the mean and the linear trend of the at least one signal to be analyzed.

Advantageously, the likelihood of obtaining erroneous or out-of-range values is reduced by eliminating the mean and the linear trend of the signal to be analyzed. As a result of this embodiment, calibration failures in sensors are prevented, and greater precision is obtained in the measurement, increasing method efficiency.

In a particular embodiment, the object is an aeronautical element.

In a particular embodiment, the at least one sensor is an accelerometer. In another particular embodiment, the at least one sensor is a strain gauge. In general, any sensor measuring acceleration, deformation, angular velocity or force that can sufficiently detect the oscillation can be used.

A second aspect of the invention relates to a computer program comprising lines of code and adapted for being run by a computer and for getting the computer to perform the steps of the method according to the first aspect of the invention.

All the features and/or steps of methods described in this specification (including the claims, description and drawings) can be combined in any combination, with the exception of combinations of such mutually exclusive features.

Description of the Drawings

The foregoing and other features and advantages of the invention will be more clearly understood based on the following detailed description of a preferred embodiment, given solely by way of illustrative and non-limiting example, in reference to the attached drawings.

    Figure 1 shows a signal measured by an accelerometer installed in a boom.
    Figure 2 shows a two-dimensional spectrogram of a measured signal.
    Figure 3 shows a three-dimensional spectrogram of a measured signal.
    Figure 4 shows the zones of the spectrogram the power spectral density of which is greater than a first threshold $\alpha$.
    Figure 5 shows a binarized spectrogram.
    Figure 6 shows a segmented spectrogram.
    Figure 7 shows a lobe of the segmented spectrogram.

Detailed Description of the Invention

The present invention relates to a method for searching for and identifying and characterizing vibrations or oscillation patterns of an object as a function of time.

This embodiment describes the method of the invention applied for measuring vibrations taking place in a boom during flight. The boom is a rigid, telescopic tube extending from a first aircraft and inserted into a receptacle of a second receiving aircraft to transfer fuel from the first aircraft to the second aircraft.

In this embodiment, a set of accelerometers is installed along the boom. Said accelerometers are adapted for measuring the acceleration indicated by a vibrational or oscillation movement in the boom.

Other types of sensors can be installed in the airplane and/or in the boom. In one embodiment, additional sensors adapted for obtaining operating parameters are installed in the boom or in the airplane or in both. Said operating parameters record the flight conditions in which vibration or oscillation in the boom is measured. An example of said parameters would be altitude, speed (of the airplane), elevation, roll, flap deflection, etc.

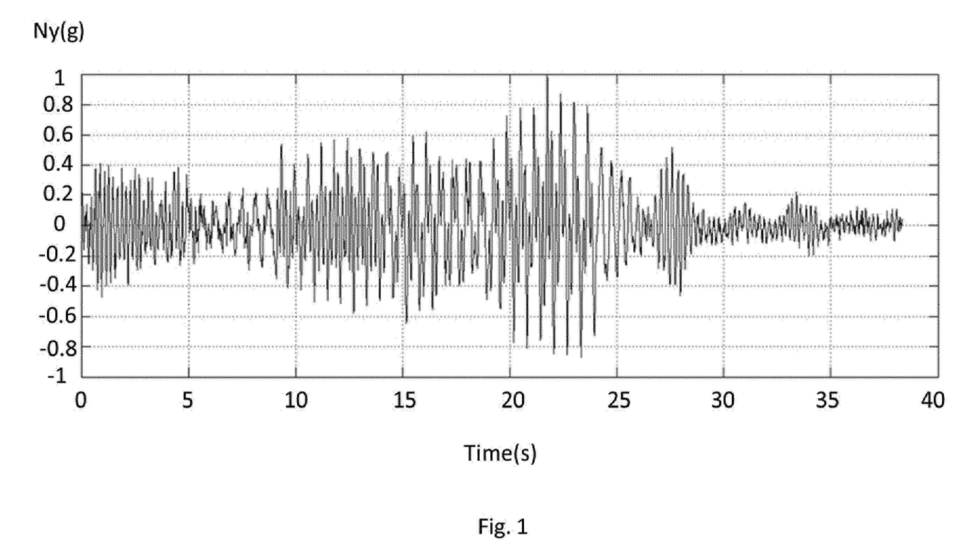

The method of the invention obtains in a first step a signal recorded by the accelerometers during a test flight with the boom deployed. Figure 1 shows the signal measured by an accelerometer installed in the boom. Said drawing shows the amplitude of the recorded forces Ny (g) on the y-axis as a function of the time recorded, in seconds, on the x-axis.

Then the acquired signal is processed in order to obtain better resolution and precision in the results and to increase method efficiency. Said processing comprises eliminating the mean and the linear trends from the acquired signal.

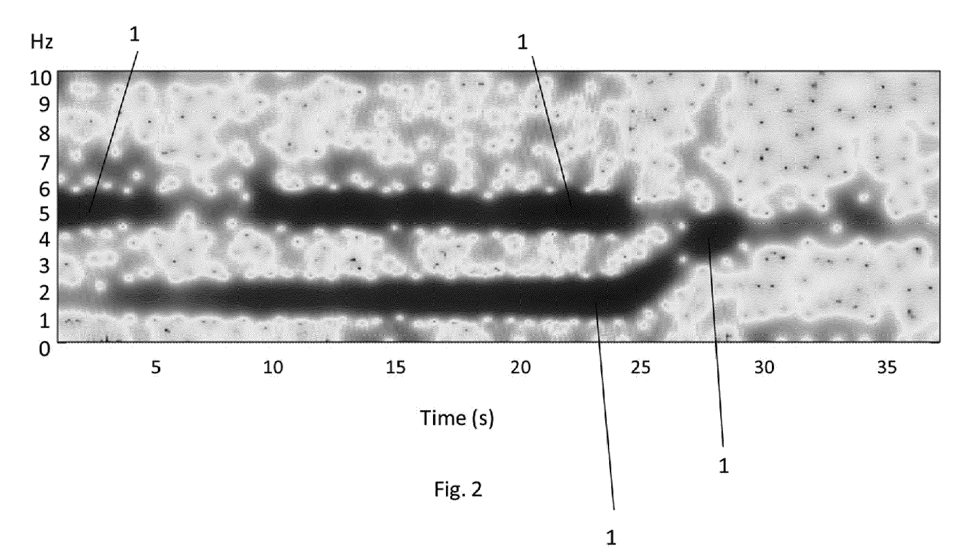

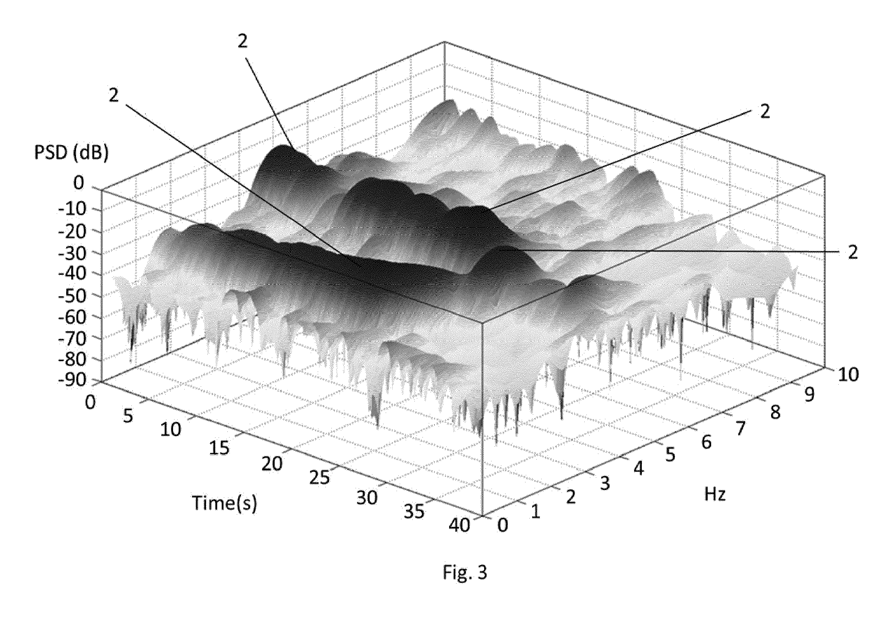

The spectrogram of said signal is obtained in a second step, choosing the spectrogram configuration parameters as a function of the frequencies to be searched, for example the frequency band between 0-10 Hz. In this embodiment, the Matlab spectrogram function, which is contained in the Signal Processing Toolbox, has been used to calculate the spectrogram. Figure 2 shows the two-dimensional (time and frequency) spectrogram of the signal acquired in the preceding step. Darker zones (1) can be observed in the spectrogram, indicating that there is a higher concentration of power in that zone; therefore, the level of vibrations is greater. Figure 3 shows the three-dimensional (time, frequency and power) spectrogram of the measured signal. The image shows the peaks (2) representing where the power is the greatest and at which frequency there are more oscillations.

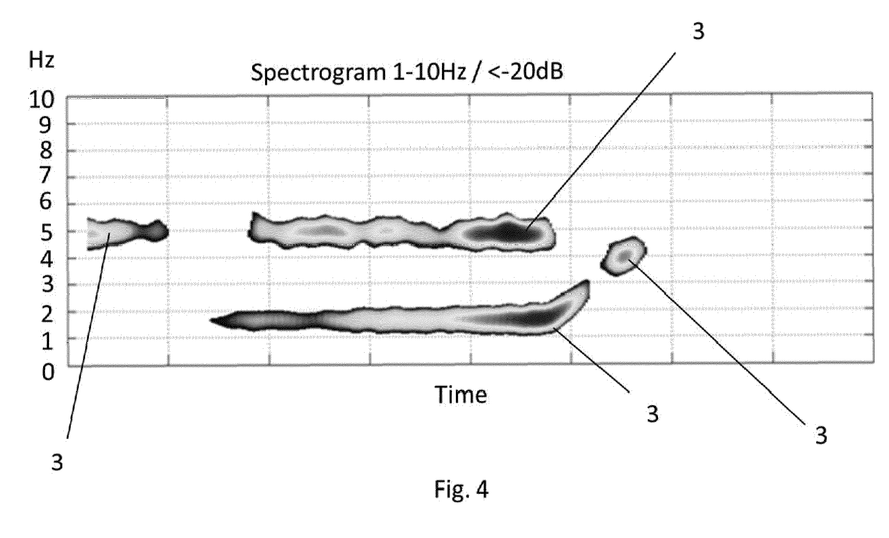

The regions of the spectrogram where the power spectral density (PSD) is greater than a first threshold $\alpha$ are identified in a third step. Figure 4 shows the spectrogram after having applied the third step. As can be seen, only those regions (3) the PSD of which is greater than said threshold remain. In this case, threshold $\alpha$ is -20dB and each of the regions indicates the existence of vibrations having a power greater than $\alpha$.

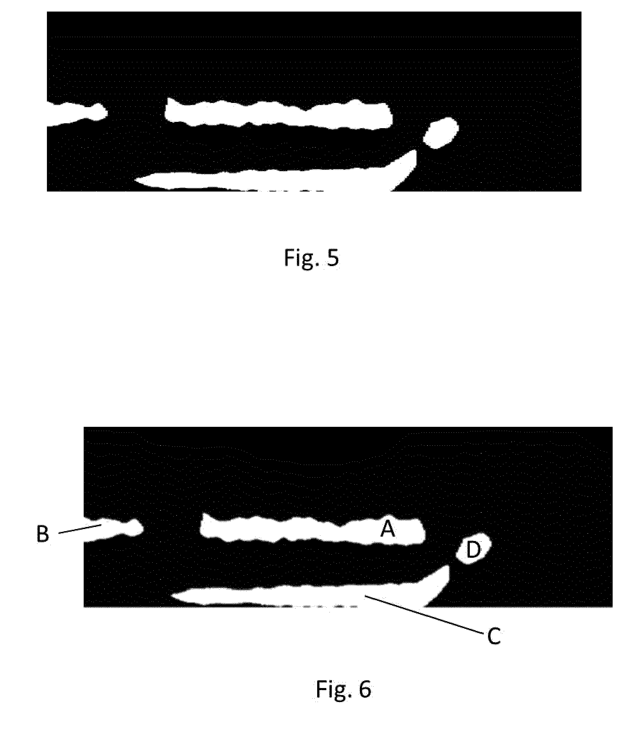

The regions identified from a second threshold $\beta$ are binarized in a fourth step to give rise to a binarized image. Figure 5 shows the spectrogram of the signal binarized according to a threshold $\beta$. The value 0 is assigned to the pixels which are below threshold $\beta$ and the value 1 is assigned to the rest in this example. A two-color image is obtained in which only the zones comprising the lobes to be studied, depicted in a color other than the background color, are maintained.

The binarized image is segmented into zones comprising at least one lobe in a fifth step. Figure 6 shows the spectrogram of the segmented signal. As can be seen in the image, each lobe has been identified with an identifier:

-    First lobe: identifier (A).
-    Second lobe: identifier (B).
-    Third lobe: identifier (C).
-    Fourth lobe: identifier (D).

It is assumed that each of the lobes contains the vibration associated with a given frequency and having a duration equal to the extension of same.

The mean frequency associated with each lobe sector is calculated in a sixth step.

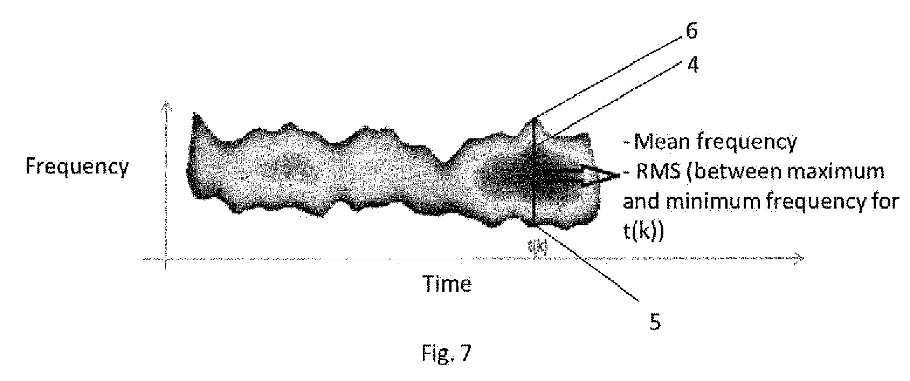

Figure 7 shows lobe A enlarged. The lobe sector (4) is equivalent to a column if the lobe A is considered to be a matrix. Said column represents the data of the lobe at a given instant in time t(k). The lower end (5) of the line corresponding to the sector in t(k) is the minimum frequency and the upper end (6) is the maximum frequency. The mean frequency of the sector is calculated from said minimum and maximum frequencies. This calculation is performed for a plurality of sectors, in which each sector corresponds to a time t(k).

The root mean square value of the sectors is calculated in a seventh step. As indicated in the preceding step, each column of the matrix is an instant in time and each row of said matrix is equal to a frequency represented on the y-axis. Therefore, the root mean square value of each sector is calculated as follows:

$$f_{rms,k} = \sqrt{\frac{1}{n}(f_1^2 + \cdots + f_n^2)}$$

where n is the number of rows or frequency values in $t(k)$, $f_1, \ldots f_n$ are the frequency values corresponding to t(k) and k identifies the instant in time or the column of the matrix.

Once the vibrations present have been identified and said vibrations have been characterized by means of determining the mean frequency and the root mean square value associated with said vibrations, in one embodiment, the method is adapted for associating each measured vibration with the external conditions in which the measurement of the signal has been taken. This is an advantage because the method allows associating each vibration with the flight conditions (altitude, speed of the airplane), elevation and roll (of the boom), which allows recognizing which conditions can cause vibrations that may damage the structure of the object.

Data relating to the mean frequency, root mean square value, amplitude and maximum PSD of each oscillation is stored in a final step in a database. So by applying statements used in databases, such as SQL, for example, all the information about oscillations during all the previously analyzed maneuvers can be efficiently extracted. In one embodiment, the method additionally comprises identifying zones "from the time point of view" in different signals in which certain frequency patterns are repeated, which allows identifying phenomena such as structural couplings, resonances, etc., between the control surfaces and the boom.

In this embodiment, the method of the invention is implemented in a computer application that can be installed in any computer. Said application is adapted for performing the steps described in this embodiment.

In a particular embodiment, the method is adapted for saving significant values in a database.

Although the embodiment described above relates to characterizing the vibrations measured in a boom, the method of the invention can be used for any object subjected to vibrations.

## Claims

1. A method for characterizing the vibrations of an object comprising the following steps:

   a) obtaining at least one signal by means of at least one sensor located in the object,
   b) obtaining the spectrogram of said at least one signal,
   c) identifying the regions of the spectrogram where the power spectral density is greater than a first threshold α,
   d) segmenting the image into zones comprising at least one lobe,
   e) calculating the mean frequency associated with each lobe sector for a plurality of lobe sectors,
   f) calculating the root mean square value of each lobe sector.

2. The method according to claim 1, additionally comprising an intermediate step between steps c) and d), wherein said step comprises:

   - binarizing from a second threshold β the identified regions of the spectrogram to give rise to a binarized image.

3. The method according to any of the preceding claims, wherein step b) comprises calculating the spectrogram using short-time Fourier transform of the signal.

4. The method according to any of the preceding claims, wherein in step b) the spectrogram is obtained for a given frequency band.

5. The method according to any of the preceding claims, wherein the method additionally comprises:

   - saving in a database the data corresponding to steps e) and f),
   - saving in a database at least one operating parameter of the conditions in which the signal has been measured.

6. The method according to claim 5, wherein the at least one operating parameter is selected from the group consisting of altitude, speed, elevation and roll.

7. The method according to any of the preceding claims, wherein the method additionally comprises identifying the repetition of at least one frequency pattern over time.

8. The method according to any of the preceding claims, wherein prior to step b), the method additionally comprises eliminating the mean and the linear trend of the at least one signal to be analyzed.

9. The method according to any of the preceding claims, wherein the object is an aeronautical element.

10. The method according to any of the preceding claims, wherein the at least one sensor is an accelerometer.

11. A computer program comprising lines of code and adapted for being run in a computer and for getting the computer to perform the steps of the method according to any of the preceding claims.

Ny(g)

Time(s)

Fig. 1

Fig. 2

EP 3 106 846 A1

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 15 38 2326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 245 589 A (ABEL JONATHAN S [US] ET AL) 14 September 1993 (1993-09-14) | 1,3-11 | INV.<br>G01H1/12<br>G01H3/04<br>G01H3/10 |
| Y | * abstract; figure 7 *<br>* column 5, lines 3-5 *<br>* column 5, lines 24-26 *<br>* column 5, lines 55-62 *<br>* column 8, lines 60-63 *<br>* column 9, lines 1-32 *<br>* column 10, lines 23-37 *<br>----- | 2 | |
| X | US 6 173 074 B1 (RUSSO ANTHONY PETER [US]) 9 January 2001 (2001-01-09)<br>* abstract; claims 1,2,7,8,9; figures 2,3,6 *<br>* column 3, lines 55-63 *<br>* column 4, lines 9-21 *<br>* column 4, lines 47-56 *<br>* column 4, line 64 - column 5, line 2 *<br>----- | 1,2,4-8, 11 | |
| Y | EP 1 148 320 A2 (NAT INSTR CORP [US]) 24 October 2001 (2001-10-24)<br>* abstract; figures 5,6 *<br>* paragraphs [0057], [0093], [0108] *<br>----- | 2 | TECHNICAL FIELDS SEARCHED (IPC)<br><br>G01H |

The present search report has been drawn up for all claims

| Place of search | Date of completion of the search | Examiner |
|---|---|---|
| The Hague | 7 December 2015 | Fernandes, Paulo |

**EP 3 106 846 A1**

## ANNEX TO THE EUROPEAN SEARCH REPORT
## ON EUROPEAN PATENT APPLICATION NO.

EP 15 38 2326

07-12-2015

| Patent document cited in search report | | Publication date | Patent family member(s) | | | Publication date |
|---|---|---|---|---|---|---|
| US 5245589 | A | 14-09-1993 | AU | 3925493 | A | 21-10-1993 |
| | | | US | 5245589 | A | 14-09-1993 |
| | | | US | 5430690 | A | 04-07-1995 |
| | | | WO | 9319384 | A1 | 30-09-1993 |
| US 6173074 | B1 | 09-01-2001 | NONE | | | |
| EP 1148320 | A2 | 24-10-2001 | EP | 1148320 | A2 | 24-10-2001 |
| | | | US | 6324487 | B1 | 27-11-2001 |
| | | | US | 6366862 | B1 | 02-04-2002 |
| | | | US | 2002046006 | A1 | 18-04-2002 |
| | | | US | 2002052714 | A1 | 02-05-2002 |

For more details about this annex : see Official Journal of the European Patent Office, No. 12/82

**EP 3 106 846 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013211259 A1
- US 4975891 A